# EUROPÄISCHE PATENTSCHRIFT

(11) **EP 1 038 235 B1**
(45) Veröffentlichungstag und Bekanntmachung des Hinweises auf die Patenterteilung: **05.09.2001**
(21) Anmeldenummer: 98954478.8
(22) Anmeldetag: 03.11.1998
(51) Int. Cl.: G06F 15/76

(54) **VORRICHTUNG ZUM HIERARCHISCHEN VERBINDEN EINER MEHRZAHL VON FUNKTIONSEINHEITEN IN EINEM PROZESSOR**
DEVICE FOR HIERARCHICAL CONNECTION OF A PLURALITY OF FUNCTIONAL UNITS IN A PROCESSOR
DISPOSITIF POUR LA CONNEXION HIERARCHIQUE D'UNE PLURALITE D'UNITES FONCTIONNELLES DANS UN PROCESSEUR

(30) Priorität: 18.12.1997 DE 19756591
(43) Veröffentlichungstag der Anmeldung: 27.09.2000
(73) Patentinhaber: SP3D Chip Design GmbH, 82319 Starnberg (DE); Cichon, Gordon, 81541 München (DE)
(72) Erfinder: CICHON, Gordon, D-81541 München (DE)
(74) Vertreter: Schoppe, Fritz, Dipl.-Ing.
(86) Internationale Anmeldenummer: EP9806948
(87) Internationale Veröffentlichungsnummer: WO9932988

(56) Entgegenhaltungen:
- EP-A- 0 634 724
- US-A- 4 553 203
- US-A- 5 121 502
- US-A- 5 276 822

## Beschreibung

Die vorliegende Erfindung bezieht sich auf Prozessorarchitekturen und insbesondere auf eine Architektur zum Verbinden einer Mehrzahl von Funktionseinheiten in einem Prozessor.

In einem Prozessor wird eine Berechnungsaufgabe erreicht, indem mehrere sogenannte Funktionseinheiten (F.U.; F.U. = Functional Unit) zusammenwirken, wobei jede Funktionseinheit eine spezifische Aufgabe erfüllt. Es existieren Funktionseinheiten, die spezielle Berechnungen durchführen, wie z. B. das Addieren oder Multiplizieren von Zahlen. Andere Funktionseinheiten sind in der Lage, Werte zu speichern, wie z. B. Speicher und Registerdateien oder "Register Files". Wieder andere Funktionseinheiten führen Logikfunktionen durch, wie z. B. eine Invertierung, eine UND-Verknüpfung und ähnliches. Schließlich existieren Funktionseinheiten, die eine Kommunikation mit der "Außenwelt" durchführen, wobei hier beispielsweise Busschnittstellen zu nennen sind. Die Funktionseinheiten arbeiten parallel und geben ihre Ergebnisse über Ausgänge an ein Verbindungsnetzwerk ab, mit dem ebenfalls die Eingänge der Funktionseinheiten verbunden sind, um Eingangswerte zu erhalten. Die Werte, welche von Funktionseinheiten ausgegeben werden, können also von anderen Funktionseinheiten wieder verwendet werden, oder aber auch von derselben Funktionseinheit, wenn beispielsweise an eine iterative Berechnung gedacht wird, bei der das Ergebnis zugleich wieder als Eingangswert verwendet wird.

Die meisten heute bekannten Prozessoren haben sehr wenige getrennte Funktionseinheiten, was hauptsächlich auf die Platzbeschränkungen der Chips zurückzuführen ist, auf denen dieselben implementiert sind. Ein bekanntes Verbindungsnetzwerk ist beispielsweise ein sogenannter Kreuzschienenschalter oder Crossbarschalter, der es erlaubt, daß jede Funktionseinheit ein von ihr berechnetes Ergebnis an jede beliebige andere Funktionseinheit weitergeben kann.

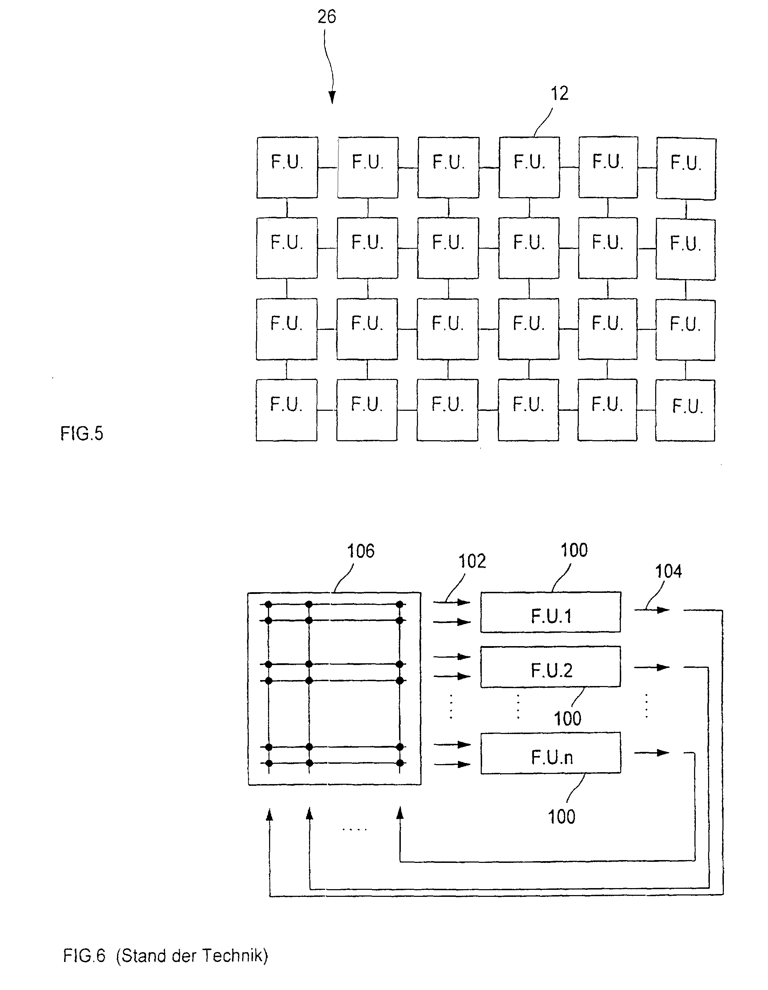

Fig. 6 zeigt eine solchermaßen bekannte Prozessorimplementation mit n Funktionseinheiten 100, welche jeweils zwei Eingänge 102 und einen Ausgang 104 aufweisen. Die Ausgänge 104 sind mit einem Crossbarschalter 106 verbunden, welcher in Fig. 6 schematisch dargestellt ist. Es ist somit möglich, jeden Wert an einem Ausgang einer Funktionseinheit 100 in jeden beliebigen Eingang 102 derselben oder einer anderen Funktionseinheit 100 einzugeben.

Ein Parallelprozessor mit einem Prozessorarray und einem Crossbarschalter ist beispielsweise aus dem U.S. Patent Nr. 5,123,109 bekannt. Der Crossbarschalter oder Router ist dort mit einer Datenerzeugungsschaltung und mit einer Datenempfangsschaltung der Prozessoren in dem Prozessorarray verbunden, um als Reaktion auf Routersteuersignale von einer Steuerschaltung die Nachrichtenübertragung zwischen den Prozessoren in dem Array gemäß der jeweiligen Adressen zu ermöglichen. Die Verbindunqsschaltung verbindet die Datenerzeugungseinrichtung und die Datenempfangseinrichtung jedes Prozessors mit einer Datenempfangseinrichtung und einer Datenerzeugungseinrichtung von benachbarten Prozessoren in dem Array, um die Übertragung von Daten zwischen jedem Prozessor und zumindest einem der benachbarten Prozessen gleichzeitig als Reaktion auf Steuersignale von der Steuerschaltung zu ermöglichen.

Ein Nachteil dieser Schaltung besteht darin, daß dieses zweidimensionale Verbindungsnetz in dem Crossbarschalter für eine große Anzahl von Prozessoren oder Speichern einfach zu kompliziert wird, wenn viele Verbindungen auf zufällige Art und Weise hergestellt werden sollen. Ferner sei darauf hingewiesen, daß die Verbindung von n Funktionseinheiten einen Crossbarschalter mit n² Verbindungspunkten benötigt. Mit steigender Anzahl von Funktionseinheiten wird somit die Größe und Komplexität des Crossbarverbindungsnetzwerks immer dominierender für die Größe, Komplexität und die Kosten des gesamten Prozessors.

Das U.S. Patent Nr. 4,968, 977 schlägt als Lösung für die nicht mehr vertretbare Anzahl von Verbindungspunkten in einem Crossbarswitch bei einer großen Anzahl von Funktionseinheiten vor, statt eines einzigen Crossbarschalters eine Vielzahl von erweiterbaren Crossbarmodulen zu verwenden, von denen jedes einen Satz von Verbindungen oder definierten Abbildungen zwischen den Sätzen von Eingangs- und Ausgangsknoten liefert, wobei jeder Ausgang bezüglich nur eines einzigen Eingangs definiert ist. Ferner ist jedes Crossbarmodul mit einem getrennten Eingangs- und Ausgangstor verbunden, durch das das Modul mit anderen identisch konfigurierten Modulen verbunden wird, wenn zusätzliche Knoten in das System integriert werden sollen. Dieser modulare Aufbau ermöglicht eine modulare Erweiterbarkeit eines bestehenden Entwurfs, ohne das gesamte Verbindungsnetzwerk neu zu entwerfen.

Das U.S. Patent Nr. 5,655,133 offenbart eine massiv multiplexte zentrale Verarbeitungseinheit mit einer Mehrzahl von unabhängigen Berechnungsschaltungen in Harvard-Architektur mit einem getrennten inneren Ergebnisbus zum Übertragen einer resultierenden Ausgabe von jeder Berechnungsschaltung und mit einer Mehrzahl von Allzweckregistern, die mit jeder Berechnungsschaltung gekoppelt sind. Jedes Allzweckregister hat multiplexte Eingangstore, die mit jedem Ergebnisbus verbunden sind. Jedes Allzweckregister hat ferner ein Ausgangstor, welches mit einem multiplexten Eingangstor zumindest einer Berechnungsschaltung verbunden ist. Die Berechnungseinheiten sind dabei zu einem Hauptdatenbus parallel gekoppelt, derart, daß Daten, die auf dem Hauptdatenbus fließen, gleichzeitig für jede Berechnungseinheit verfügbar sind.

Das U.S. Patent Nr. 4,952,930 bezieht sich auf ganze Computernetze und offenbart ein hierarchisches Mehrwegnetz. Hierbei wird für ein Mehrwegnetz, d. h. ein Netz, bei dem mehrere Wege zwischen einer Datenquelle und einem Datenziel bestehen, z. B. dem Internet, eine hierarchische Verbindungsstruktur zwischen einer Mehrzahl von Quellen und einer Mehrzahl von Zielen beschrieben. Die Hierarchie umfaßt ein erstes Mehrwegnetz ohne Speicherung, welches aus zwei oder mehreren Stufen besteht, und welches einen schnellen Weg zum Verbinden einer Quelle mit einem Ziel liefert. Zumindest ein zweites Mehrwegnetz mit Speicherung und einer Mehrzahl von Stufen bildet einen alternativen langsameren Weg zum Verbinden einer Quelle mit einem Ziel, falls eine Verbindung zwischen der Quelle und dem Ziel auf dem ersten, schnellen Weg blockiert ist. Das Adressenfeld einer Nachricht von einer Quelle wird an jeder Stufe untersucht, um eine geeignete Verbindung zu der nächsten Stufe auszuwählen, wobei die Nachricht, wenn die Verbindung verfügbar ist, ohne Adressenfeld zu der zweiten Stufe weitergereicht wird, wobei jedoch, wenn die nächste Stufe blockiert ist, die Nachricht angehalten wird, und eine negative Bestätigung zu der Quelle zurückgeschickt wird. Ein Neusenden der Nachricht über das zweite Netz der Hierarchie wird beim Empfang einer negativen Bestätigung an der Quelle eingeleitet.

Die DE 3048414 offenbart eine Schaltungsanordnung für eine Datenverarbeitungsanlage, in der eine Vielzahl von zentralen Untersystemen in Datenaustausch über einen einzigen Eingabe/Ausgabe-Multiplexer steht, wobei jedem zentralen Untersystem ein Übertragungsregister zugeordnet ist, derart, daß eine Ausgabe von einem zentralen Untersystem zunächst in das Übertragungsregister, das diesem Untersystem zugeordnet ist, eingespeist wird, um erst anschließend über den einzigen Eingabe/Ausgabe-Multiplexer zu einem anderen zentralen Untersystem übertragen zu werden.

Die Europäische Patentanmeldung EP-A-0 634 724 offenbart eine Vorrichtung zum hierarchischen Verbinden einer Mehrzahl von Prozessoren in einem Netzwerk, wobei zwischen den Knoten des Netwerks serielle Verbindungen hergestellt werden, die einfach oder doppelt sind.

Das U.S. Patent US-A-5 121 502 offenbart eine Vorrichtung, die abhängig von der Befehlsart eine Auswahl zwischen einer seriellen und einer parallelen Verbindung bietet.

Die Aufgabe der vorliegenden Erfindung besteht darin, eine Prozessorarchitektur zu schaffen, bei der jede Funktionseinheit mit jeder anderen Funktionseinheit verbunden ist, und bei der dennoch eine effiziente Auslegung des Verbin-dungsnetzwerks beachtet wird.

Diese Aufgabe wird durch eine Vorrichtung zum hierarchischen Verbinden einer Mehrzahl von Funktionseinheiten in einem Prozessor gemäß Anspruch 1 und durch einen Prozessor gemäß Anspruch 14 gelöst.

Der vorliegenden Erfindung liegt die Erkenntnis zugrunde, daß üblicherweise in einem Prozessor mit vielen Funktionseinheiten der wesentliche Teil der Kommunikation, d. h. der Benutzung des Verbindungsnetzwerkes, zwischen bestimmten Funktionseinheiten und nicht beliebig zwischen allen Funktionseinheiten auftritt. Es existieren somit beliebte Verbindungen und weniger oft verwendete Verbindungen. Erfindungsgemäß wird im Interesse eines effizienten Verbindungsnetzwerkes dieser Situation Rechnung getragen. Dies bedeutet, daß für die bevorzugten Kommunikationswege möglichst schnelle Kommunikationsverbindungen eingerichtet werden, während die langsamen Kommunikationswege im Interesse der schnellen Kommunikationswege bezüglich der wichtigen oder häufig verwendeten Kommunikationswege verzögert werden.

Um die Vorteile der vorliegenden Erfindung vollständig auszunutzen, werden immer wenige benachbarte Funktionseinheiten über eine erste Verbindungseinrichtung gewissermaßen direkt verbunden, während weiter entfernt auf einem Chip angeordnete Funktionseinheiten über eine zweite Verbindungseinrichtung und eine Zwischenspeicherung mit einer der wenigen, benachbarten Funktionseinheiten kommunizieren. Durch schnelles Verbinden benachbarter Funktionseinheiten wird zugleich die Tatsache ausgenutzt, daß zwischen benachbarten Funktionseinheiten sehr kurze Drähte bzw. Leiter bestehen, wodurch Signallaufzeiten gering sind, weshalb hier hohe Taktfrequenzen eingesetzt werden können.

Zum schnellen Verbinden von Funktionseinheiten, die im Vergleich zur gesamten Aktivität in dem Prozessor sehr häufig kommunizieren, wird vorzugsweise ein relativ kleiner Multiplexer eingesetzt, der somit selbst nur eine minimale Laufzeit besitzt. Als zweite Verbindungseinrichtung kann ebenfalls ein Multiplexer verwendet werden, jedoch mit wesentlich mehr Eingängen als der Multiplexer erster Ordnung.

Um die Speicherwirkung zwischen der kleinen Verbindungseinrichtung erster Ordnung und der großen Verbindungseinrichtung zweiter Ordnung zu implementieren, wird vorzugsweise ein Register eingesetzt, das einen über die Verbindungseinrichtung zweiter Ordnung empfangenen Wert so lange speichert, bis derselbe von einer Funktionseinheit benötigt wird, die mit der Verbindungseinrichtung erster Ordnung verbunden ist. Ein zwischengespeicherter Wert wird somit mindestens um einen Taktzyklus zwischengespeichert. Diese Zwischenspeicherung bewirkt die gewissermaßen "absichtliche" Verlangsamung der Verbindungen über die Verbindungseinrichtung zweiter Ordnung.

Wenn jedoch davon ausgegangen wird, daß beispielsweise 90% der Verbindungsaktivität zwischen benachbarten Funktionseinheiten stattfindet, die schnell über den Multiplexer erster Ordnung verbunden sind, und lediglich 10% der Kommunikationsaktivität in einem Prozessor über die Verbindungseinrichtung zweiter Ordnung und damit auch über die Speichereinrichtung stattfindet, so ist der zusätzlich eingeführte Wartezyklus für die gesamte Prozessorarbeitszeit nicht wesentlich, da üblicherweise in der Speichereinrichtung gespeicherte Werte von weiter entfernt angeordneten Funktionseinheiten hergeschafft werden müssen, wobei dieses Herschaffen auch in die Größenordnung des einen Wartezyklus kommen können. Die vorliegende Erfindung führt stattdessen sogar zu einer Reduzierung der Prozessorarbeitszeit im Vergleich zu einem Prozessor mit einem großen Crossbarschalter, der aufgrund seiner Ausdehnung zu insgesamt erhöhten Signallaufzeiten durch denselben führt.

Um die Vorteile der hierarchischen Verbindungsnetzwerks zum Verbinden einer Mehrzahl von Funktionseinheiten in einem Prozessor optimal auszunutzen, ist es notwendig, den Prozessor derart zu programmieren und die Funktionseinheiten derart auszulegen, daß möglichst viele Berechnungen von benachbarten Funktionseinheiten durchgeführt werden können. Die vorliegende Erfindung wird daher bei anwendungsorientierten Prozessoren, wie z. B. für Grafikaufbereitungseinrichtungen und dergleichen, bei denen bestimmte Berechnungsstrukturen sehr häufig auftreten, den größten Nutzen im Hinblick auf die Komplexität des Verbindungsnetzwerks und die Schnelligkeit des Prozessors haben.

Bevorzugte Ausführungsbeispiele der vorliegenden Erfindung werden nachfolgend bezugnehmend auf die beiliegenden Zeichnungen detaillierter erläutert. Es zeigen:
- Fig. 1: eine schematische verallgemeinerte Darstellung einer hierarchischen Verbindung zwischen einer Mehrzahl von Funktionseinheiten in einem Prozessor;
- Fig. 2: eine etwas detailliertere Darstellung eines hierarchischen Verbindungsnetzwerks mit zwei Ebenen;
- Fig. 3: Verbindungen erster Ordnung von Funktionseinheiten für einen Gleitkommaprozessor;
- Fig. 4: eine bevorzugte Berechnungsanordnung, welche nur mit Verbindungen über Verbindungseinrichtungen erster Ordnung auskommt;
- Fig. 5: ein schematisches planares Prozessorlayout; und
- Fig. 6: eine bekannte Verbindungsarchitektur mittels eines Kreuzschienenschalters.

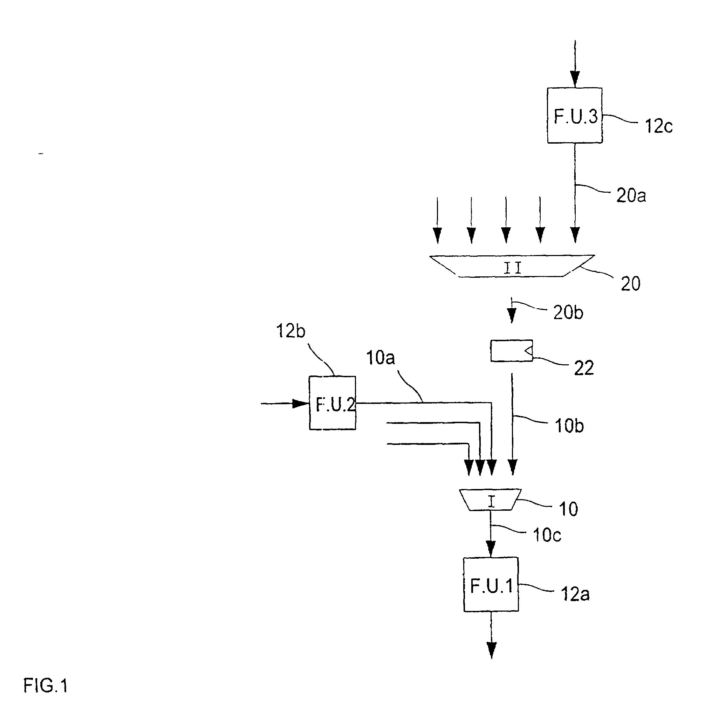

Fig. 1 zeigt eine schematische Darstellung einer Vorrichtung zum hierarchischen Verbinden einer Mehrzahl von Funktionseinheiten in einem Prozessor gemäß der vorliegenden Erfindung. Die Vorrichtung zum hierarchischen Verbinden umfaßt eine Verbindungseinrichtung erster Ordnung 10 mit zumindest zwei Eingängen 10a, 10b und einem Ausgang 10c. Mit dem Ausgang 10c ist der Eingang einer ersten Funktionseinheit 12 (F.U.1) verbunden. Die erste Funktionseinheit 12 weist ferner im einfachsten Fall einen Ausgang auf. Funktionseinheiten mit lediglich einem Eingang und einem Ausgang können beispielsweise die Funktion eines logischen Invertierers durchführen. Es wird jedoch darauf hingewiesen, daß die vorliegende Erfindung mit Funktionseinheiten ausgeführt werden kann, welche eine beliebige Anzahl von Eingängen und eine beliebige Anzahl von Ausgängen haben.

Die Vorrichtung zum hierarchischen Verbinden einer Mehrzahl von Funktionseinheiten in einem Prozessor gemäß der vorliegenden Erfindung umfaßt ferner eine Verbindungseinrichtung zweiter Ordnung 20, welche zumindest einen Eingang 20a und einen Ausgang 20b aufweist. Der zumindest eine Eingang 20a der Verbindungseinrichtung zweiter Ordnung 20 ist mit dem Ausgang einer dritten Funktionseinheit 12c (F.U.3) verbunden.

Eine zweite Funktionseinheit 12b (F.U.2) ist ferner mit dem ersten Eingang 10a der Verbindungseinrichtung erster Ordnung 10 verbunden. Vorzugsweise ist zwischen den Ausgang 20b der Verbindungseinrichtung zweiter Ordnung 20 und den zweiten Eingang 10b der Verbindungseinrichtung erster Ordnung 10 eine Speichereinrichtung 22 in Form eines Registers geschaltet. Diese Speichereinrichtung 22 in Form eines Registers bewirkt die Speicherfunktion der Verbindung über die Verbindungseinrichtung 20 der zweiten Ordnung. Für Fachleute ist es offensichtlich, daß die Speichereinrichtung 22 auch beispielsweise als Verzögerungseinrichtung oder ähnliches und nicht unbedingt als Register implementiert sein muß.

Mit der sehr einfachen Ausführung der Funktionseinheiten 12a bis 12c, die in Fig. 1 gezeigt ist, können jedoch bereits folgende Operationen ausgeführt werden. Ist es beispielsweise notwendig, daß die erste Funktionseinheit 12a sehr oft Ausgabewerte der zweiten Funktionseinrichtung 12b zu invertieren hat, so existiert zwischen der ersten und der zweiten Funktionseinheit eine schnelle Verbindung über die Verbindungseinrichtung erster Ordnung 10, welche vorzugsweise ebenso wie die Verbindungseinrichtung zweiter Ordnung 20 als Multiplexer ausgeführt sein kann. Wird sehr selten ein Ausgangswert der dritten Funktionseinheit 12c durch die erste Funktionseinheit 12a benötigt, so führt die durch die Speichereinrichtung 22 eingeführte Wartezeit zu keiner wesentlichen Erhöhung der Rechenzeit. Im Interesse einer schnellen Verbindung zwischen der ersten und der zweiten Funktionseinheit kann jedoch nun die Verbindungseinrichtung erster Ordnung 10 als sehr kleiner Multiplexer, d. h. als Multiplexer mit sehr wenigen Eingängen, ausgeführt werden, wodurch die Laufzeit durch den Multiplexer 10 wesentlich geringer als die Laufzeit durch einen Multiplexer wäre, an dem noch die dritte Funktionseinheit 12c direkt angeschlossen wäre.

Bei der näheren Betrachtung der hierarchischen Verbindungsvorrichtung, welche in Fig. 1 gezeigt ist, ist erkennbar, daß der Vorteil dieser Verbindung im realen Fall wesentlich größer ist, wenn mehr als drei Funktionseinheiten miteinander verbunden werden. Wären alle Funktionseinheiten an dem Multiplexer erster Ordnung 10 angeschlossen, so würde dieser ein sehr großer Multiplexer mit einer ziemlich hohen Durchlaufzeit sein. Auch häufig verwendete Kommunikationsverbindungen zwischen immer zwei gleichen Funktionseinheiten würden somit lediglich durch die Tatsache verlangsamt, daß viele weitere Funktionseinheiten angeschlossen sind, die jedoch sehr selten oder fast nie benötigt werden. Die Idee der vorliegenden Erfindung besteht also darin, daß eine Funktionseinheit mit wenigen anderen Funktionseinheiten über einen schnellen Multiplexer erster Ordnung verbunden werden, wobei diese Verbindungen einen großen Teil der notwendigen Kommunikation ausmachen sollen. Eine weitere jetzt flexiblere aber langsamere Verbindung zu jeder anderen Funktionseinheit wird zusätzlich über einen Multiplexer zweiter Ordnung geschaffen, welcher durch ein Register gepuffert wird, wobei der Multiplexer erster Ordnung über das Register durch den Multiplexer zweiter Ordnung gespeist wird. Das Register 22 dient zur Speicherung eines an dem zumindest einen Eingang 20a des Multiplexers zweiter Ordnung 20 angelegten Werts, bis dieser Wert dann von der ersten Funktionseinheit 12a benötigt wird, d. h. falls der Kommunikationsweg über den zweiten Eingang 10b der Verbindungseinrichtung erster Ordnung 10 durch eine geeignete bekannte Multiplexersteuerungsvorrichtung freigeschaltet ist. Ein Vorteil dieser Kommunikationsstruktur besteht also darin, daß bei häufiger Kommunikation zwischen der ersten Funktionseinheit 12a und der zweiten Funktionseinheit 12b über den Multiplexer erster Ordnung der Wert des Registers 22 relativ selten abgerufen wird, weshalb zum Neufüllen des Registers 22 relativ viel Zeit zur Verfügung steht, um beispielsweise Resultate einer weiter entfernt angeordneten dritten Funktionseinheit 12c zu der Speichereinrichtung 22 zu schaffen.

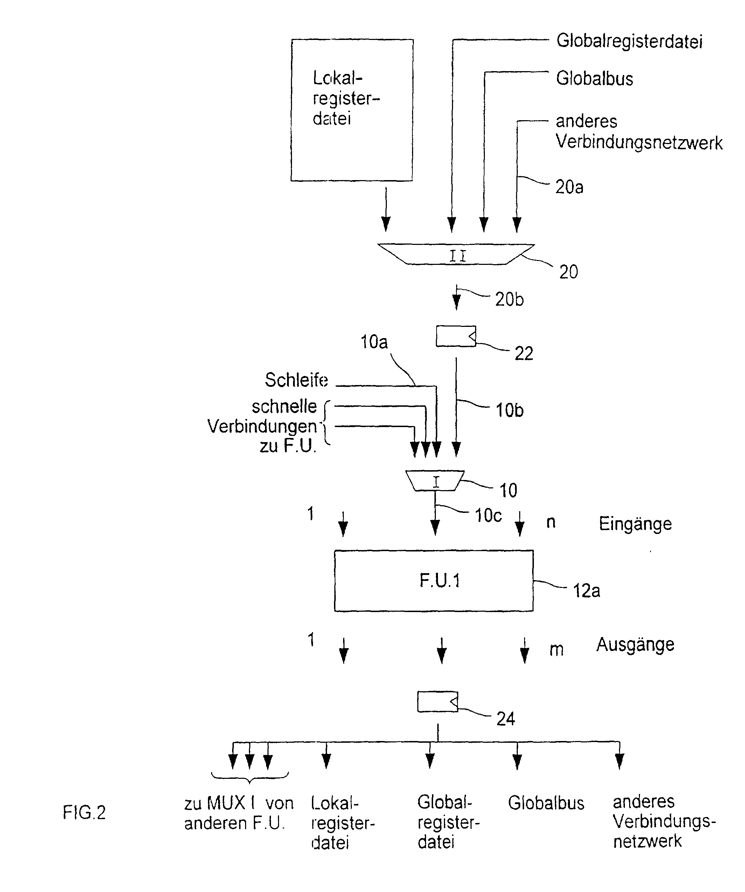

Fig. 2 zeigt eine detailliertere Darstellung eines Verbindungsnetzwerks mit zwei Ebenen, d. h. einer ersten Ebene von Verbindungen über die Verbindungseinrichtung 10 erster Ordnung sowie einer zweiten Ebene von Verbindungen über die Verbindungseinrichtung zweiter Ordnung 20. Die erste Funktionseinheit 12a weist im Gegensatz zu der ersten Funktionseinheit 12a von Fig. 1 eine beliebig große Anzahl von n Eingängen sowie eine beliebig große Anzahl von m Ausgängen auf. Bei einer praktischen Realisierung des hierarchischen Verbindungsnetzwerks kann jeder Eingang mit einer Verbindungseinrichtung erster Ordnung 10 versehen werden. Es ist jedoch nicht erfindungswesentlich, daß genau jeder Eingang eine eigene Verbindungseinrichtung 10 erster Ordnung haben muß. Vorzugsweise ist jeder Ausgang der ersten Funktionseinheit 12a mit einem Ausgangsregister 24 versehen, welches zur Speicherung oder zur Verstärkung des in demselben gespeicherten Signals dienen kann.

Wie es bereits erwähnt wurde, kann der Multiplexer zweiter Ordnung 20 eine sehr große Anzahl von Eingängen aufweisen. Mögliche spezifischere Funktionseinheiten, die mit dem Multiplexer zweiter Ordnung 20 verbunden sein können, umfassen eine Lokalregisterdatei oder ein Lokalregisterfile zum Speichern von Werten, die nicht unbedingt sofort von der Funktionseinheit benötigt werden. Mit dem Multiplexer zweiter Ordnung 20 kann ferner eine Globalregisterdatei verbunden sein, welche bei den meisten Allzweckprozessoren zu finden ist und einen üblichen Entwurf haben kann. Mit dem Multiplexer zweiter Ordnung 20 könnte jedoch auch ein Globalbus verbunden sein, um einen einzigen Wert über den gesamten Chip leiten zu können. Der Globalbus kann direkt am Multiplexer 20 angeschlossen sein, oder über eine Globalbusschnittstelle. An dem Multiplexer zweiter Ordnung 20 kann jedoch auch jedes andere Verbindungsnetzwerk angeschlossen sein, welches in diesem Zusammenhang zu finden ist. Dies kann beispielsweise ein bekannter Kreuzschienenschalter sein, um einen Wert von einer beliebigen Stelle des Prozessors zu der Funktionseinheit 12a zu bringen. Dasselbe kann jedoch auch ein sogenanntes Hypercube-Network sein, welches sich besonders gut für die Ausführung von binären baumartigen Berechnungen eignet. Es kann jedoch auch jedes andere bekannte Verbindungsnetzwerk an dem zumindest einen Eingang 20a des Multiplexers zweiter Ordnung 20 angeschlossen sein.

Der Multiplexer erster Ordnung 10 weist neben dem Eingang 10b, der mit dem Ausgang der Speichereinrichtung 22 verbunden ist, eine beliebige, jedoch kleine Anzahl von weiteren Eingängen auf, welche für schnelle Verbindungen zu anderen Funktionseinheiten vorgesehen sind, welche vorzugsweise die der ersten Funktionseinheit 12a benachbarten Funktionseinheiten sind. Der mit der Bezeichnung "Schleife" versehene Eingang soll kennzeichnen, daß der Ausgangswert der Funktionseinheit 12a ebenfalls wieder in den Eingang der Funktionseinheit eingespeist werden kann, wenn die Funktionseinheit 1 beispielsweise für iterative Berechnungen spezifiziert ist.

An dieser Stelle sei darauf hingewiesen, daß ein Multiplexer mit vier Eingängen bei derzeitiger Technologie etwa eine Latenz von 1 - 2 ns besitzt. Ein einzelnes Register besitzt eine ähnliche Latenz. Zeitkritisch dagegen sind Registerdateien, die mehrere Register enthalten, und große Multiplexer. Ein Multiplexer mit 8 Eingängen benötigt beispielsweise schon 2 - 3 ns, während eine Registerdatei mit 16 Registern bereits 5 ns zum Schreiben und noch einmal 5 ns zum Lesen der Werte benötigt. Es ist daher besonders vorteilhaft, als Verbindungseinrichtung erster Ordnung 10 einen Multiplexer mit sehr wenigen Eingängen vorzusehen, während die Anzahl der Eingänge des Multiplexers zweiter Ordnung 20 keine derart dominierende Rolle spielt, da der wesentliche Anteil der Kommunikation über die Verbindungseinrichtung erster Ordnung 10 und nicht über die Verbindungseinrichtung zweiter Ordnung 20 und die Speichereinrichtung 22 stattfinden wird.

An dieser Stelle sei bereits auf Fig. 5 vorgegriffen, welche das planare Layout eines Prozessors gemäß der vorliegenden Erfindung zeigt, bei dem eine Funktionseinheit mit vier benachbarten Funktionseinheiten über einen Multiplexer erster Ordnung verbunden ist, während dieselbe Funktionseinheit über einen Multiplexer zweiter Ordnung (in Fig. 5 nicht gezeigt) mit jeder anderen Funktionseinheit kommunizieren kann. In diesem Fall würde der Multiplexer erster Ordnung bereits sechs Eingänge haben, einen für die Schleife, vier für die schnellen Verbindungen zu den benachbarten Funktionseinheiten und einen für die Verbindung mit der Registerdatei und mit dem Multiplexer zweiter Ordnung. Besonders vorteilhaft sind jedoch Fälle, bei denen lediglich beispielsweise zwei benachbarte Funktionseinheiten oft miteinander kommunizieren müssen. Dann würde der Multiplexer erster Ordnung, wenn auch keine Schleife benötigt wird, lediglich zwei Eingänge und damit eine minimale Latenz für die häufig benötigte Kommunikationsverbindung aufweisen.

Im nachfolgenden werden nun noch einmal die Entwurfsregeln für eine hierarchische Verbindung gemäß der vorliegenden Erfindung genannt. Zunächst ist es wünschenswert, lediglich sehr wenige Funktionseinheiten an den Multiplexer der ersten Ordnung anzuschließen, wie z. B. lediglich drei oder vier. Weiterhin ist es besonders vorteilhaft, sehr nah aneinander auf dem Chip angeordnete Funktionseinheiten, am besten Funktionseinheiten, die benachbart sind, an den Multiplexer erster Ordnung anzuschließen. Schließlich wird es bevorzugt, ein Register 24 an die Ausgänge der Funktionseinheit zu schalten, um das Signal für die Weiterverteilung zu verstärken. Vorzugsweise unterscheidet das Register 24, ob ein Wert zu Multiplexern erster Ordnung oder zu anderen Prozessorkomponenten geleitet wird. In diesem Fall kann es sinnvoll sein, die Werte für beide Fälle unterschiedlich zu verstärken. Für das an den Multiplexer zweiter Ordnung anschließbare Netz bestehen alle bekannten Möglichkeiten. Die Architektur dafür ist völlig offen.

Die hierarchische Verbindungsstruktur gemäß der vorliegenden Erfindung ist somit in der Lage, die Vorteile eines globalen Verbindungsnetzes, welche in der flexiblen Ausführung im wesentlichen aller möglichen Berechnungen und in einer starken Ausnutzung von Rechenressourcen zu sehen sind, mit den Vorteilen eines lokalen Verbindungsschemas zu kombinieren, welche in einer sehr schnellen Kommunikation zwischen lokal nahe aneinander angeordneten Einheiten, in einer kleinen Chipfläche, in kurzen Drähten und in einer kurzen Verzögerung oder Signallaufzeit zu sehen sind.

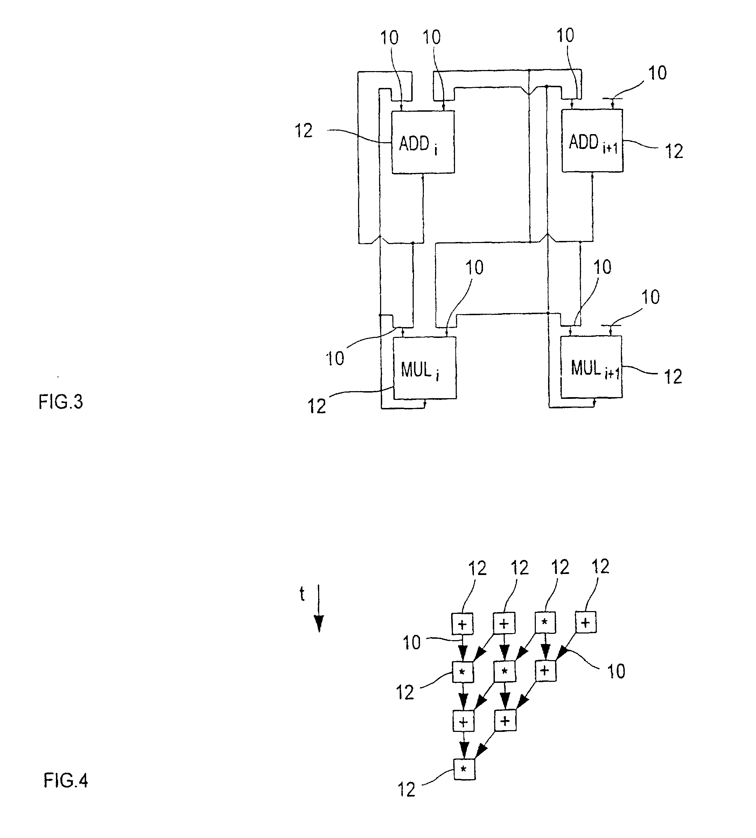

Fig. 3 zeigt einen Ausschnitt einer gleichförmigen Prozessorarchitektur mit mehreren Funktionseinheiten 12 in Form von Addierern (ADD) und Multiplizierern (MUL). Diese Architektur ist beispielsweise zur Implementation von Gleitkommaprozessoren geeignet, welche aus Gleitkommaaddierern und Gleitkommamultiplizierern bestehen. Die Addierer und Multiplizierer sind in einer Reihe auf dem Chip angeordnet. Die Addierer und Multiplizierer sind ferner in der Lage, ihre Ergebnisse zu negieren. Jede Einheit (i) hat zwei Eingangstore und ein Ausgangstor. In Fig. 3 sind lediglich die Multiplexer erster Ordnung 10 gezeigt, wobei aus Fig. 3 insbesondere ersichtlich ist, daß jeder Eingang einer Funktionseinheit mit einem derartigen schnellen Multiplexer erster Ordnung versehen ist. Aus Übersichtlichkeitsgründen sind in Fig. 3 keine Multiplexer zweiter Ordnung gezeigt. Ein Multiplexer zweiter Ordnung in Verbindung mit einem Register 22 ist jedoch an jedem Multiplexer erster Ordnung 10 als dritter Eingang vorgesehen, um einen Addierer bzw. einen Multiplizierer zusätzlich aus einem Lokalregisterspeicher oder einem Globalregisterspeicher mit beispielsweise konstanten Werten oder bereits lange vorher berechneten variablen Werten zu speisen. Aus Fig. 3 ist ferner ersichtlich, daß bei dieser Ausführung der vorliegenden Erfindung bezüglich der ersten Ebene jeweils das linke Eingangstor einer Funktionseinheit mit dem entsprechenden Ausgangstor sowohl des Addierers als auch des Multiplizierers verbunden ist, während die rechten Tore mit den Ausgangstoren der nächsten Addierer und Multiplizierer verbunden sind.

In der in Fig. 3 gezeigten Konfiguration sind die Einheiten in der Lage, einfache baumartige Berechnungen ohne Schaltungsmehraufwand durchzuführen, wohingegen Baumschemen mit einem komplexeren Datenfluß ein Umschalten auf die zweite Ebene benötigen, wobei bei diesem Umschalten dann zumindest die durch das Register 22 eingeführte Latenz wirksam wird. Wenn die Berechnung jedoch hauptsächlich baumartig ist, wird der größte Teil des Schaltungsmehraufwands eingespart und trägt nicht zur Berechnungszeit bei.

Fig. 4 zeigt eine Beispielrechnung, bei der die verschiedenen Funktionseinheiten nebeneinander dargestellt sind. Die zeitliche Abfolge in Fig. 4 findet ferner von oben nach unten statt, wie es durch den mit t bezeichneten Pfeil symbolisch dargestellt ist. Die Eingänge der einzelnen Funktionseinheiten 12 können entweder über den entsprechenden Multiplexer der ersten Ordnung 10 geschaltet werden, was in Fig. 4 durch die dicken Pfeile dargestellt ist. Die Ausgänge können jedoch ebenfalls über den Multiplexer zweiter Ordnung geschaltet werden, welcher in Fig. 4 aus Übersichtlichkeitsgründen weggelassen wurde. Statt daß die Funktionseinheiten ihre Eingabewerte von Nachbareinheiten beziehen, wie es in Fig. 4 dargestellt ist, können die Funktionseinheiten über den Multiplexer zweiter Ordnung 20 und das Register 22 Daten global einlesen. Dies könnte in Fig. 4 durch Pfeile zwischen zwei beliebigen Einheiten symbolisch dargestellt werden, welche jedoch aufgrund des durch das Register 22 eingeführten Wartens eine Länge von 2 "Einheiten" bezüglich der vertikalen Abstands haben müßten. Die Funktionseinheiten könnten jedoch auch aus einer Registerdatei lesen. Dieses Lesen könnte durch einen Registerlesezugriff einen Zyklus vor der entsprechenden Berechnung ausgeführt werden. Die Ausgangswerte der Funktionseinheiten und insbesondere der letzten Funktionseinheit 12 in Fig. 4 können mit beliebigen Schreibports von Registerdateien verbunden sein. In Registerdateien können dann die Ergebnisse geschrieben werden, die nicht sofort weiterverwendet werden sollen, sondern die für eine spätere Weiterverarbeitung oder Ausgabe gespeichert werden sollen.

Fig. 5 zeigt einen planar entworfenen Prozessor mit einer Vielzahl von Funktionseinheiten 12, wobei, wie es bereits erwähnt wurde, in Fig. 5 ersichtlich ist, daß jeweils eine Funktionseinheit mit ihren vier benachbarten Funktionseinheiten über einen Multiplexer erster Ordnung (in Fig. 5 nicht gezeigt) verbunden ist. Die Multiplexer zweiter Ordnung sind in Fig. 5 aus Übersichtlichkeitsgründen nicht eingezeichnet. Sie können jedoch als Pfeile zwischen beliebigen Funktionseinheiten, welche nicht benachbart sind, verstanden werden. Für Fachleute ist es offensichtlich, daß ein Prozessor ebenfalls Steuereinrichtungen aufweist, welche die verschiedenen Funktionseinheiten und Multiplexer in einer korrekten Ablaufsteuerung halten.

Schließlich sei angemerkt, daß, obwohl Fig. 2 einen anderen Anschein erwecken könnte, eine Registerdatei ebenfalls als Funktionseinheit verstanden werden kann, wie es auch in der Beschreibungseinleitung festgestellt wurde. Dieselbe muß somit nicht zum Verbindungsnetzwerk gezählt werden. Falls eine Registerdatei als eigenständige Funktionseinheit angesehen wird, ergeben sich eine einzige globale und eine beliebige Anzahl von lokalen Funktionseinheiten, die selbst wiederum nach dem vorgeschlagenen Verbindungsschema verschaltet werden können. Dieses Beispiel macht deutlich, daß das hierarchische Netzwerk gemäß der vorliegenden Erfindung nicht nur auf zwei Ebenen begrenzt ist, sondern in sich verschachtelt beliebig viele Ebenen bilden kann. In diesem Falle kann berücksichtigt werden, daß nicht nur Kommunikationen zwischen einzelnen Funktionseinheiten oft auftreten, sondern auch Kommunikationen zwischen verschiedenen Gruppen von Funktionseinheiten bevorzugt auftreten. Diese Gruppen würden dann in Analogie zu einzelnen Funktionseinheiten wieder über einen schnellen Multiplexer verbunden sein, während sie mit anderen nicht so häufig zur Kommunikation benötigten Gruppen über einen Speicher und einen größeren und damit auch langsameren Multiplexer gekoppelt sind.

## Patentansprüche

1. Vorrichtung zum hierarchischen Verbinden einer Mehrzahl von Funktionseinheiten (12a, 12b, 12c) in einem Prozessor, mit folgenden Merkmalen:
einer Verbindungseinrichtung (10) erster Ordnung mit zumindest zwei Eingängen (10a, 10b) und einem Ausgang (10c), die betreibbar ist, um einen der zumindest zwei Eingänge (10a, 10b) mit dem Ausgang (10c) zu verbinden, wobei der Ausgang (10c) der Verbindungseinrichtung erster Ordnung (10) mit einem Eingang einer ersten Funktionseinheit (12a) verbunden ist, und wobei ein Ausgang einer zweiten Funktionseinheit (12b) mit einem ersten Eingang (10a) der zumindest zwei Eingänge (10a, 10b) der Verbindungseinrichtung erster Ordnung (10) verbunden ist; und
einer Verbindungseinrichtung zweiter Ordnung (20) mit zumindest einem Eingang (20a) und einem Ausgang (20b), die betreibbar ist, um den zumindest einen Eingang (20a) mit dem Ausgang (20b) zu verbinden, wobei der zumindest eine Eingang (20a) der Verbindungseinrichtung zweiter Ordnung (20) mit einer dritten Funktionseinheit (12c) verbunden ist, und wobei ein an dem zumindest einen Eingang (20a) der Verbindungseinrichtung zweiter Ordnung (20) anlegbares Signal zwischenspeicherbar ist, bevor es zu einem weiteren Eingang (10b) der Verbindungseinrichtung erster Ordnung (10) weitergeleitet wird;
wobei Verbindungen, die durch die Verbindungseinrichtung erster Ordnung (10) hergestellt werden, kürzere Signallaufzeiten aufweisen, als Verbindungen, die durch die Verbindungseinrichtung zweiter Ordnung (20) hergestellt werden;
wobei eine Verbindung zwischen Funktionseinheiten, die durch die Verbindungseinrichtung (10) erster Ordnung hergestellt wird, häufiger als eine Verbindung zwischen Funktionseinheiten, die durch die Verbindungseinrichtung zweiter Ordnung (20) hergestellt wird, bei einer von dem Prozessor durchgeführten Aufgabe verwendet wird.

2. Vorrichtung nach Anspruch 1, bei der das an den zumindest einen Eingang (20a) der Verbindungseinrichtung zweiter Ordnung (20) anlegbare Signal solange zwischenspeicherbar ist, bis die erste Funktionseinheit (12a) dasselbe benötigt.

3. Vorrichtung nach Anspruch 1 oder 2, bei der die Verbindungseinrichtung erster Ordnung (10) und die Verbindungseinrichtung zweiter Ordnung (20) als Multiplexer erster bzw. zweiter Ordnung ausgeführt sind.

4. Vorrichtung nach einem der vorhergehenden Ansprüche, bei der die Zwischenspeicherung des an den zumindest einen Eingang (20a) der Verbindungseinrichtung zweiter Ordnung (20) anlegbaren Signals durch eine Registereinrichtung (22) implementiert ist, die zwischen den Ausgang (20b) der Verbindungseinrichtung zweiter Ordnung (20) und den weiteren Eingang (10b) der Verbindungseinrichtung erster Ordnung (10) geschaltet ist.

5. Vorrichtung nach einem der vorhergehenden Ansprüche, bei der die Mehrzahl von Funktionseinheiten (12a, 12b, 12c) in dem Prozessor planar angeordnet ist.

6. Vorrichtung nach einem der vorhergehenden Ansprüche, bei der die erste (12a) und die zweite (12b) Funktionseinheit bezüglich ihrer Lage in dem Prozessor benachbart sind, während die erste (12a) und die dritte (12c) Funktionseinheit bezüglich ihrer Lage in dem Prozessor nicht benachbart sind.

7. Vorrichtung nach einem der vorhergehenden Ansprüche, wobei die Anzahl der Eingänge der Verbindungseinrichtung erster Ordnung (10) kleiner als die Anzahl der Eingänge der Verbindungseinrichtung zweiter Ordnung (20) ist.

8. Vorrichtung nach einem der vorhergehenden Ansprüche, bei der die Anzahl der Eingänge der Verbindungseinrichtung erster Ordnung (10) höchstens fünf beträgt, wobei vier Eingänge der Verbindungseinrichtung erster Ordnung (10) nur mit Ausgängen von Funktionseinheiten belegt sind, die der ersten Funktionseinheit (12a) physisch benachbart sind, während an dem fünften Eingang das zwischenspeicherbare Signal von der Verbindungseinrichtung (20) zweiter Ordnung anlegbar ist.

9. Vorrichtung nach einem der vorhergehenden Ansprüche, bei der am Ausgang der ersten (12a), der zweiten (12b) und der dritten (12c) Funktionseinheit jeweils eine Registereinrichtung (24) vorgesehen ist, um den Ausgabewert der jeweiligen Funktionseinheit zwischenzuspeichern und/oder zu verstärken.

10. Vorrichtung nach einem der vorhergehenden Ansprüche, bei der der Ausgabewert einer Funktionseinheit in einen Eingang der Verbindungseinrichtung erster Ordnung (10), die dieser Funktionseinheit zugeordnet ist, eingebbar ist.

11. Vorrichtung nach einem der vorhergehenden Ansprüche, bei der die Ausgänge von Funktionseinheiten, die nicht über die Verbindungseinrichtung erster Ordnung verbindbar sind, mit einer Kommunikationsschnittstelle verbunden sind, die wiederum mit weiteren Eingängen entsprechend der Verbindungseinrichtung zweiter Ordnung gekoppelt ist.

12. Vorrichtung nach einem der vorhergehenden Ansprüche, bei der jede Funktionseinheit eine beliebige Anzahl von Eingängen und Ausgängen aufweist, wobei jeder Eingang einer Funktionseinheit mit dem Ausgang einer Verbindungseinrichtung erster Ordnung verbunden ist, die diesem Eingang zugeordnet ist, und wobei jeder Ausgang mit dem Eingang eines eigenen Registers (22) verbunden ist.

13. Vorrichtung nach einem der vorhergehenden Ansprüche, bei der eine Funktionseinheit eine Berechnungseinrichtung, eine Speichereinrichtung, eine Logikeinrichtung oder eine Busschnittstelleneinrichtung aufweist.

14. Prozessor (26) mit folgenden Merkmalen:
einer Mehrzahl von Funktionseinheiten (12a, 12b, 12c);
einer Vorrichtung zum hierarchischen Verbinden der Mehrzahl von Funktionseinheiten (12a, 12b, 12c) nach einem der Ansprüche 1 - 13; und
einer Steuerungseinrichtung zum Steuern der Funktionseinheiten (12a, 12b, 12c) und der Vorrichtung zum hierarchischen Verbinden.

## Claims

1. A device for the hierarchical connection of a plurality of functional units (12a, 12b, 12c) in a processor, comprising the following features:
a first-order connector (10) with at least two inputs (10a, 10b) and an output (10c), which is adapted to be operated so as to connect one of the at least two inputs (10a, 10b) to the output (10c), where the output (10c) of the first-order connector (10) is connected to an input of a first functional unit (12a) and where an output of a second functional unit (12b) is connected to a first input (10a) of the at least two inputs (10a, 10b) of the first-order connector (10); and
a second-order connector (20) with at least one input (20a) and an output (20b), which is adapted to be operated so as to connect the at least one input (20a) to the output (20b), where the at least one input (20a) of the second-order connector (20) is connected to a third functional unit (12c) and where a signal which is appliable to the at least one input (20a) of the second-order connector (20) is bufferable before it is forwarded to a further input (10b) of the first-order connector (10);
where connections which are established by the first-order connector (10) exhibit shorter signal transit times than connections which are established by the second-order connector (20);
where a connection between functional units which is established by the first-order connector (10) is more frequently used in a task performed by the processor than is a connection between functional units which is
established by the second-order connector (20).

2. A device according to claim 1, wherein the signal which is appliable to the at least one input (20a) of the second-order connector (20) is bufferable until the first functional unit (12a) requires the same.

3. A device according to claim 1 or 2, wherein the first-order connector (10) and the second-order connector (20) are implemented as multiplexers of the first and second order respectively.

4. A device according to one of the preceding claims, wherein the buffering of the signal which is appliable to the at least one input (20a) of the second-order connector (20) is implemented by a register (22) which is connected between the output (20b) of the second-order connector (20) and the further input (10b) of the first-order connector (10).

5. A device according to one of the preceding claims, wherein the plurality of functional units (12a, 12b, 12c) is arranged in a planar formation in the processor.

6. A device according to one of the preceding claims, wherein the first (12a) and the second (12b) functional unit are neighbours as regards their location in the processor, while the first (12a) and the third (12c) functional unit are not neighbours as regards their location in the processor.

7. A device according to one of the preceding claims, wherein the number of inputs of the first-order connector (10) is smaller than the number of inputs of the second-order connector (20).

8. A device according to one of the preceding claims, wherein the number of inputs of the first-order connector (10) is at most five and where four inputs of the first-order connector (10) are occupied only by outputs of functional units which are physical neighbours of the first functional unit (12a), while the bufferable signal of the second-order connector (20) is appliable to the fifth input.

9. A device according to one of the preceding claims, wherein the output of the first (12a), the second (12b) and the third (12c) functional unit are each provided with a register (24) to buffer and/or amplify the output value of the respective functional unit.

10. A device according to one of the preceding claims, wherein the output value of a functional unit can be fed into an input of the first-order connector (10) which is assigned to this functional unit.

11. A device according to one of the preceding claims, wherein the outputs of functional units which are not connectable via the first-order connector are connected to a communication interface which is in turn coupled to further inputs in accordance with the second-order connector.

12. A device according to one of the preceding claims, wherein each functional unit has an optional number of inputs and outputs, where each input of a functional unit is connected to the output of a first-order connector which is assigned to this input and where each output is connected to the input of its own register (22).

13. A device according to one of the preceding claims, wherein a functional unit comprises a calculator, a memory, a logic unit or a bus interface unit.

14. A processor (26) comprising the following features:
a plurality of functional units (12a, 12b, 12c);
a device for the hierarchical connection of the plurality of functional units (12a, 12b, 12c) according to one of the claims 1 - 13; and
a controller for controlling the functional units (12a, 12b, 12c) and the device for hierarchical connection.

## Revendications

1. Dispositif pour la connexion hiérarchique d'une pluralité d'unités fonctionnelles (12a, 12b, 12c) dans un processeur, ayant les caractéristiques suivantes:
un dispositif de connexion (10) du premier niveau avec au moins deux entrées (10a, 10b) et une sortie (10c) qui est utilisable pour connecter une desdites au moins deux entrées (10a, 10b) à la sortie (10c), la sortie (10c) du dispositif de connexion du premier niveau (10) étant connectée à une entrée d'une première unité fonctionnelle (12a) et une sortie d'une deuxième unité fonctionnelle (12b) étant connectée avec une première entrée (10a) desdites au moins deux entrées (10a, 10b) du dispositif de connexion du premier niveau (10), et
un dispositif de connexion du deuxième niveau (20) avec au moins une entrée (20a) et une sortie (20b) qui est utilisable pour connecter ladite au moins une entrée (20a) à la sortie (20b), ladite au moins une entrée (20a) du dispositif de connexion du deuxième niveau (20) étant connectée à une troisième unité fonctionnelle (12c) et un signal applicable à ladite au moins une entrée (20a) du dispositif de connexion du deuxième niveau (20) pouvant être temporairement mis en mémoire avant d'être transmis à une autre entrée (10b) du dispositif de connexion du premier niveau (10),
dans lequel les connexions qui sont établies par le dispositif de connexion du premier niveau (10) présentent des durées de signal plus courtes que les connexions qui sont établies par le dispositif de connexion du deuxième niveau (20),
dans lequel une connexion entre unités fonctionnelles qui est établie par le dispositif de connexion (10) du premier niveau est utilisée plus souvent qu' une connexion entre unités fonctionnelles qui est établie par le dispositif de connexion du deuxième niveau (20) pour une tâche
exécutée par le processeur.

2. Dispositif selon la revendication 1, dans lequel le signal applicable à ladite au moins une entrée (20a) du dispositif de connexion du deuxième niveau (20) peut être mis temporairement en mémoire jusqu'à ce que la première unité fonctionnelle (12a) en ait besoin.

3. Dispositif selon la revendication 1 ou 2, dans lequel le dispositif de connexion du premier niveau (10) et le dispositif de connexion du deuxième niveau (20) sont réalisés comme des multiplexeurs du premier ou du deuxième niveau.

4. Dispositif selon une des revendications précédentes, dans lequel la mise en mémoire temporaire du signal applicable à ladite au moins une entrée (20a) du dispositif de connexion du deuxième niveau (20) est effectuée par un dispositif de registre (22) qui est branché entre la sortie (20b) du dispositif de connexion du deuxième niveau (20) et l'autre entrée (10b) du dispositif de connexion du premier niveau (10).

5. Dispositif selon une des revendications précédentes, dans lequel la pluralité des unités fonctionnelles (12a, 12b, 12c) est disposée dans un plan dans le processeur.

6. Dispositif selon une des revendications précédentes, dans lequel la première (12a) et la deuxième (12b) unité fonctionnelle sont voisines pour ce qui est de leur position dans le processeur, tandis que la première (12a) et la troisième (12c) unité fonctionnelle ne sont pas voisines pour ce qui est de leur position dans le processeur.

7. Dispositif selon une des revendications précédentes, dans lequel le nombre des entrées du dispositif de connexion du premier niveau (10) est plus petit que le nombre des entrées du dispositif de connexion du deuxième niveau (20).

8. Dispositif selon une des revendications précédentes, dans lequel le nombre des entrées du dispositif de connexion du premier niveau (10) s'élève au maximum à cinq, quatre entrées du dispositif de connexion du premier niveau (10) étant uniquement en ligne avec des sorties d'unités fonctionnelles qui sont physiquement voisines de la première unité fonctionnelle (12a), tandis le signal pouvant être temporairement mis en mémoire peut être appliqué à la cinquième entrée par le dispositif de connexion du deuxième niveau (20).

9. Dispositif selon une des revendications précédentes, dans lequel un dispositif de registre est chaque fois prévu à la sortie de la première (12a), de la deuxième (12b) et de la troisième (12c) unité fonctionnelle pour mettre temporairement en mémoire et / ou renforcer la valeur de sortie de l'unité fonctionnelle concernée.

10. Dispositif selon une des revendications précédentes, dans lequel la valeur de sortie d'une unité fonctionnelle peut être entrée dans une entrée du dispositif de connexion du premier niveau (10) qui est coordonné à cette unité fonctionnelle.

11. Dispositif selon une des revendications précédentes, dans lequel les sorties des unités fonctionnelles qui ne peuvent être connectées par le dispositif de connexion du premier niveau sont connectées à une interface de communication qui à son tour est accouplée avec d'autres entrées en fonction du dispositif de connexion du deuxième niveau.

12. Dispositif selon une des revendications précédentes, dans lequel chaque unité fonctionnelle comprend un nombre quelconque d'entrées et de sorties, chaque entrée d'une unité fonctionnelle étant connectée à une sortie d'un dispositif de connexion du premier niveau qui est coordonné à cette entrée et chaque sortie étant connectée à l'entrée d'un registre propre (22).

13. Dispositif selon une des revendications précédentes, dans lequel une unité fonctionnelle comprend un dispositif de calcul, un dispositif de mémoire, un dispositif logique ou un dispositif d'interface de bus.

14. Processeur (26) ayant les
caractéristiques suivantes:
une pluralité d'unités fonctionnelles (12a, 12b, 12c),
un dispositif pour la connexion hiérarchique de la pluralité d'unités fonctionnelles (12a, 12b, 12c) selon une des revendications 1 - 13, et
un dispositif de pilotage pour piloter les unités fonctionnelles (12a, 12b, 12c) et le dispositif de connexion hiérarchique.
